(19) Europäisches Patentamt
European Patent Office
Office européen des brevets

(11) **EP 2 568 616 B1**

(12) **EUROPEAN PATENT SPECIFICATION**

(45) Date of publication and mention
of the grant of the patent:
**07.02.2018 Bulletin 2018/06**

(51) Int Cl.:
*H04B 1/30* *(2006.01)*     *H04L 27/36* *(2006.01)*

(21) Application number: **11180147.8**

(22) Date of filing: **06.09.2011**

(54) **Wireless communications device with impairment compensation and associated methods**

Drahtlose Kommunikationsvorrichtung mit Integritätsausgleich und zugehörige Verfahren

Dispositif de communication sans fil avec compensation de déficience et procédés associés

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2013 Bulletin 2013/11**

(73) Proprietor: **BlackBerry Limited
Waterloo, ON N2K 0A7 (CA)**

(72) Inventor: **Muhammad, Khurram
Irving, TX Texas 75039 (US)**

(74) Representative: **Noble, Nicholas et al
Kilburn & Strode LLP
Lacon London
84 Theobalds Road
London WC1X 8NL (GB)**

(56) References cited:
**US-A1- 2003 045 249     US-B1- 7 856 048**

- **DEBAILLIE B ET AL: "Calibration of
Direct-Conversion Transceivers", IEEE
JOURNAL OF SELECTED TOPICS IN SIGNAL
PROCESSING, IEEE, US, vol. 3, no. 3, 1 June 2009
(2009-06-01), pages 488-498, XP011257782, ISSN:
1932-4553**

**Description**

**Technical Field**

The present disclosure relates to the field of wireless communications, and more particularly, to compensation of a transmitter within a mobile wireless communications device.

**Background**

In general, undesired or non-ideal characteristics, such as DC offset and in-phase/ quadrature-phase (IQ) imbalance, degrade performance of mobile transceivers. The DC offset is the effect of self mixing by a mixer, and occurs when a signal of a local oscillator (LO) returns after leaking toward an antenna or when a radio frequency (RF) modulation signal input through the antenna is leaked to the local oscillator. Another way to create DC offset is through an inherent offset in the amplifiers due to imbalances. If the DC offset is amplified by amplifiers in the signal path, then this way may saturate a baseband circuit.

The IQ imbalance is caused when the phase difference between the in-phase (I) channel signal and the quadrature-phase (Q) channel signal generated in an oscillator of a wireless transmitter is not 90 degrees. The IQ imbalance can be reduced by designing mixers of the I channel demodulator and the Q channel demodulator to be precisely 90 degrees in phase delay (i.e., orthogonal) to each other. However, designing the mixers so that there is precisely a 90 degrees phase difference to each other is not practical over process and temperature variations. This is because in the layout, the I and Q paths to the mixers traverse different lengths despite the best effort of keeping everything symmetrical. This is especially true for multi-band systems. An IQ imbalance increases the Bit Error Rate (BER), thereby degrading the performance of the wireless transceiver.

One approach for compensating DC offset and IQ imbalance between orthogonal signals within in a mobile wireless communications device is disclosed in U.S. Patent No. 7,782,928. The communications device includes a transmitter that functions as a signal generator, and a receiver that functions as a response characteristic detector. A baseband processor applies predefined test signals to the transmitter, receives the test signals returning from the receiver, and compensates the imbalance and DC offset for the transmitter side and the receiver side by using the test signals.

Another approach for compensating DC offset and IQ imbalance between orthogonal signals within in a mobile wireless communications device is disclosed in U.S. Published Patent Application No. 2009/0262861. A baseband processor generates an I baseband signal and a Q baseband signal. A direct up-converter is coupled to the baseband processor, and combines the I and Q baseband signals with an RF carrier signal to generate an RF output signal. The antenna is coupled to the direct up-converter, and transmits the RF output signal. An impairment detection and compensation feedback circuit is coupled to the RF output signal, and the I and Q baseband signals. The impairment detection and compensation feedback circuit down-converts the RF output signal to generate an intermediate frequency (IF) signal, measures as least one signal impairment in the IF signal, and pre-distorts the I and Q baseband signals to compensate for the measured signal impairment.

Yet another approach is disclosed in the article titled "Calibration of Direct-Conversion Transceivers" by Debaille, IEEE Journal of Selected Topics in Signal Processing, Volume 3, No. 3, June 2009. To enable separation of the impairments caused by the transmitter and the receiver, their local oscillators are operated at slightly different frequencies. Compensation is then based on using a dual-tone calibration signal, such as a standard compliant OFDM modulated preamble, wherein a multi-tone symbol travels through a transceiver configured in loop-back. The compensation is performed by pre- and post-compensating the baseband signal of the transmitter and receiver respectively.

Even in view of the above approaches for compensating DC offset and IQ imbalance between orthogonal signals within in a mobile wireless communications device, there is still a need to improve such compensation. A drawback of the above approaches is that data cannot be transmitted by the transmitter when being trained or compensated.

US 7,856,048 details methods and systems for autocalibrating a transceiver. The method can include upconverting a bandpass input signal by mixing the bandpass input signal with a first local oscillator signal to form an initial transmitter signal. The initial transmitter signal can be looped back to a receiver and downconverted with a second local oscillator signal having a frequency that is different from the first local oscillator to form an intermediate frequency signal. At least one of a gain and a phase of the transmitter can be adjusted based on a transmitter image sideband of the intermediate frequency signal to generate a calibrated transmitter signal having minimized transmitter image sideband.

**Brief Description of the Drawings**

FIG. 1 is a schematic block diagram of a mobile wireless communications device in accordance with one exemplary aspect.

FIG. 2 is a more detailed schematic block diagram of the mobile wireless communications device illustrated in FIG. 1.

FIG. 3 is a schematic block diagram of another embodiment of the non-directional coupler illustrated in FIG. 2.

FIG. 4 is a spectral plot of the transmit baseband modulated signal provided by the data modulator in accordance with one exemplary aspect.

FIG. 5 is a spectral plot of the RF modulated signal having the transmit impairment as provided by the transmitter in accordance with one exemplary aspect.

FIG. 6 is a spectral plot of the receive baseband modulated signal having the receive impairment spectrally separated from the transmit impairment as provided by the auxiliary receiver in accordance with one exemplary aspect.

FIG. 7 is a more detailed schematic block diagram of the mobile wireless communications device illustrated in FIG. 1.

FIG. 8 is a spectral plot of a complex filter applied to the receive baseband modulated signal in accordance with one exemplary aspect.

FIG. 9 is a spectral plot of a selective filter applied to the positive frequencies in the receive baseband modulated signal in accordance with one exemplary aspect.

FIG. 10 is a spectral plot of selective filters applied to the positive and negative frequencies in the receive baseband modulated signal in accordance with one exemplary aspect.

FIG. 11 is a flowchart illustrating a method for operating a mobile wireless communications device while taking into account impairment compensation in accordance with one exemplary aspect.

FIG. 12 is a constellation plot of a signal with zero EVM in accordance with one exemplary aspect.

FIG. 13 is a constellation plot of a signal with a non-zero EVM in accordance with one exemplary aspect.

FIG. 14 is a flowchart illustrating a method for operating a mobile wireless communications device while taking into account performance evaluation in accordance with one exemplary aspect.

FIG. 15 is a front view of a mobile wireless communications device in accordance with another exemplary aspect.

FIG. 16 is a schematic block diagram illustrating additional components that may be included in the mobile wireless communications device illustrated in FIG. 15.

## Detailed Description

The invention is set out in the claims.

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout and prime notations are used to indicate similar elements in alternative embodiments.

In accordance with one example, a mobile wireless communications device comprises a portable housing, and a transceiver, an auxiliary receiver and a controller all carried by the portable housing. The transceiver may comprise a transmitter and a receiver, and the transmitter may be configured to upconvert a transmit baseband modulated signal and generate an RF modulated signal having a transmit impairment. The auxiliary receiver may be coupled to the controller and configured to downconvert the RF modulated signal and generate a receive baseband modulated signal having a receive impairment therein spectrally separated from the transmit impairment.

The controller may be coupled to the transmitter and the auxiliary receiver. The controller may be configured to estimate the transmit impairment while ignoring the receive impairment based on comparing the transmit baseband modulated signal with the receive baseband modulated signal, and generate a transmit impairment compensation signal based upon the estimated transmit impairment.

The controller may be configured to perform the estimating and generating during operation of the transmitter while transmitting data. This advantageously allows the compensation of the transmitter to be performed in the background during regular operation of the transmitter.

The transmit baseband modulated signal may comprise an in-phase (I) component signal and a quadrature-phase (Q) component signal. A non-directional coupler may be carried by the portable housing and coupled between the transceiver and the auxiliary receiver. An antenna may be carried by the portable housing and coupled to the transceiver.

The transmitter may comprises a transmit impairment compensator configured to compensate the transmit baseband modulated signal based on the transmit impairment compensation signal. The controller is configured to perform the comparing in a plurality of iterations to determine difference values therebetween. The transmit impairment compensator may be configured to perform the compensation by iteratively adding correction values to the transmit baseband modulated signal to compensate for the difference values from the plurality of iterations.

The controller may be configured to calculate the correction values based on a least means square (LMS) algorithm. The controller may comprise a delay circuit configured to delay the transmit baseband modulated signal so that the transmit baseband modulated signal and the receive baseband modulated signal match up in time when compared.

The transmitter may comprise a transmit local oscillator operating at a first frequency, and the auxiliary receiver may comprise a receive local oscillator operating at a second frequency offset from the first frequency. This advantageously allows the

transmitter impairment to be separated in the frequency domain from the impairments added in the auxiliary receiver. Otherwise, if the transmitter and the auxiliary receiver were to use the same local oscillator with no frequency offset, then the IQ imbalance of the auxiliary receiver becomes indistinguishable from the IQ imbalance introduced in the transmitter. The DC offsets introduced in the auxiliary receiver also become indistinguishable from the offsets introduced in the transmitter.

The transmitter may be configured to operate in a dual-mixer mode, and the auxiliary receiver may be configured to operate in a single-mixer mode. The modulated signal may be generated at a carrier frequency. The transmitter may comprise a first mixer stage operating at an intermediate frequency, and a second mixer stage operating at the carrier frequency minus the intermediate frequency. The auxiliary receiver may comprise a mixer stage operating at the carrier frequency.

Alternatively, the transmitter may be configured to operate in a single-mixer mode, and the auxiliary receiver may be configured to operate in the dual-mixer mode (i.e., a two step down-conversion to DC). The transmitter may comprise a mixer stage operating at the carrier frequency. The auxiliary receiver may comprise a first mixer stage operating at the carrier frequency minus the intermediate frequency, and a second mixer stage operating at the intermediate frequency preferably in the digital domain.

An example method is for operating a mobile wireless communications device as described above. The method may comprise generating a transmit baseband modulated, and operating the transmitter to upconvert the transmit baseband modulated signal and generate an RF modulated signal having a transmit impairment. The auxiliary receiver may be operated to downconvert the RF modulated signal and generate a receive baseband modulated signal having a receive impairment therein spectrally separated from the transmit impairment. The controller may be operated to estimate the transmit impairment while ignoring the receive impairment based on comparing the transmit baseband modulated signal with the receive baseband modulated signal, and to generate a transmit impairment compensation signal based upon the estimated transmit impairment. The transmitter may compensate the transmit baseband modulated signal based on the compensation signal.

After the above described impairment has been estimated and compensation has been applied to a mobile wireless communications device, performance of the device can then be monitored, and if necessary, tuned to improve performance. This is advantageously performed without the need for external test equipment. However, this exemplary aspect can be practiced without having to perform the above described impairment estimation and compensation.

In accordance with this exemplary aspect, the transmitter may be configured to be selectively operable based on a control signal between a single-mixer mode (zero-IF direct up-conversion) and a dual-mixer mode (low-IF direct up-conversion) to upconvert the transmit baseband modulated signal and generate an RF modulated signal having the transmit impairment. The auxiliary receiver may be configured to be selectively operable based on the control signal between the single-mixer mode (zero-IF direct conversion), when the transmitter is in the dual-mixer mode, and the dual-mixer mode (low-IF direct conversion), when the transmitter is in the single-mixer mode, to downconvert the RF modulated signal and generate a receive baseband modulated signal having the transmit impairment. All four combinations of using the zero-IF or low-IF modes between the transmitter and receiver are all valid modes of operation.

In particular, the auxiliary receiver may be selectively operable in the single-mixer mode when the transmitter is selectively operable in the dual-mixer mode, and in the dual-mixer mode when the transmitter is selectively operable in the single-mixer mode. The operation is to ensure that the impairments added by the transmitter are frequency separated from the impairments added in the auxiliary receiver. This is so that compensations can be correctly computed by comparing the reference transmit signal with the part of the signal received from the auxiliary receiver that isolates the signal that results from the impairments created in the transmitter or the auxiliary-receiver.

The controller may be configured to compare the transmit baseband modulated signal to the transmit impairment to determine an error difference therebetween, and generate the control signal based on the error difference.

The error difference may correspond to an error vector magnitude (EVM), and the controller may be configured to derive a signal-to-noise ratio (SNR) of the RF modulated signal based on the EVM. The controller may be configured to estimate a bit error rate (BER) of the RF modulated signal based on the SNR.

When the transmitter is operating in the dual-mixer mode, this is advantageous when transmitting data at a high output power while fighting VCO pulling. However, if performance of the transmitter begins to decline, then the transmitter may be selected to operate in the single-mixer mode while transmitting at low power. In this mode, the transmitter may be recompensated if necessary so that the performance of the transmitter is improved.

If the auxiliary receiver is operating in the dual-mixer mode, then this is advantageous for estimating the impairments created in the transmitter and in the auxiliary receiver, which in turn may be used when compensating the transmitter or the auxiliary receiver. Once the impairments have been compensated in the auxiliary receiver, then the auxiliary receiver may advantageously be operated in the single-mixer mode.

For example, the transmitter may be selectively configured to operate in the dual-mixer mode and may comprise a first mixer stage operating at the intermediate frequency, and a second mixer stage operating at the carrier frequency minus the intermediate frequency. In this case, the auxiliary receiver may be selectively configured to operate in the single-mixer mode and may comprise a mixer stage operating at the carrier frequency. Alternatively, the transmitter may be operated in low-IF mode to allow frequency separation of transmit and receive impairments (i.e., DC offsets and I/Q imbalance).

For another example, the transmitter may be selectively configured to operate in the single-mixer mode and may comprise a mixer stage operating at the carrier frequency. In this case, the auxiliary receiver may be selectively configured to operate in the dual-mixer mixer and may comprise a first mixer stage operating at the carrier frequency minus an intermediate frequency, and a second mixer stage operating at the intermediate frequency.

A method aspect is for operating a mobile wireless communications device as described above. The method may comprise selectively operating the transmitter based on a control signal between a single-mixer mode and a dual-mixer mode to upconvert a transmit baseband modulated signal and generate an RF modulated signal having a transmit impairment. The auxiliary receiver may be selectively operated based on the control signal between the single-mixer mode and the dual-mixer mode to downconvert the RF modulated signal and generate a receive baseband modulated signal having the transmit impairment. The transmitter may be operated in the dual-mixer mode when transmitting very high output power, in which case, VCO pulling degrades the output spectral purity.

The auxiliary receiver may be selectively operable in the single-mixer or dual-mixer mode when the transmitter is selectively operable in the dual-mixer mode, and in the dual-mixer mode when the transmitter is selectively operable in the single-mixer mode. The method may further comprise operating the controller to compare the transmit baseband modulated signal to the transmit impairment to determine an error difference therebetween, and generate the control signal based on the error difference.

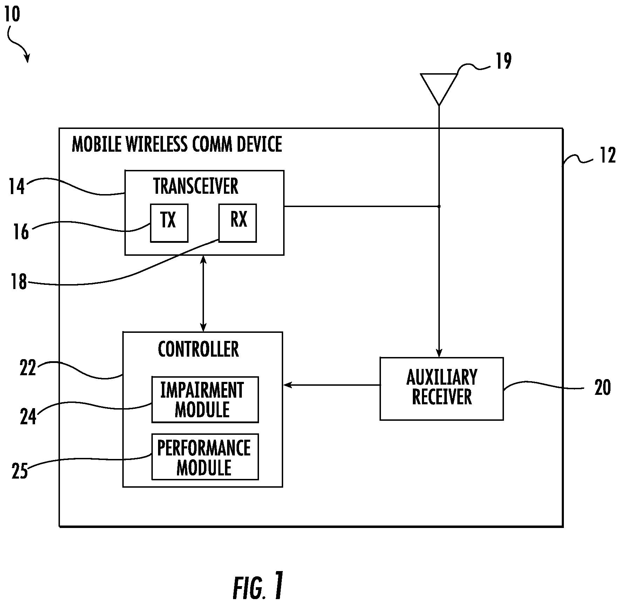

Referring initially to FIG. 1, a mobile wireless communications device **10** comprises a portable housing **12,** a transceiver **14** comprising a transmitter **16** and a receiver **18** carried by the portable housing, and an antenna **19** coupled to the transceiver. An auxiliary receiver **20** is carried by the portable housing **12** and is coupled to the transmitter **16.** The auxiliary receiver **20** may also be referred to as a feedback receiver. The controller **22** is carried by the portable housing **12** and is coupled to the transmitter **16** and to the auxiliary receiver **20.** The controller **22** includes an impairment module **24** to estimate impairment within the transmitter **16,** and to generate a transmit impairment compensation signal based on the estimated transmit impairment.

More particularly, the transmitter **16** is configured to upconvert a transmit baseband modulated signal and generate an RF modulated signal having the transmit impairment therein. Typically, analog circuitry in the transmit chain within the transmitter **16** causes the transmit impairment.

The auxiliary receiver **20** is configured to downconvert the RF modulated signal and generate a receive baseband modulated signal having a receive impairment therein spectrally separated from the transmit impairment. Typically, analog circuitry in the receive chain within the auxiliary receiver **20** causes the receive impairment. The controller **22** is configured to estimate the transmit impairment while ignoring the receive impairment based on comparing the transmit baseband modulated signal with the receive baseband modulated signal, and generate the transmit impairment compensation signal based upon the estimated transmit impairment. The transmit impairment compensation signal is provided to the transmitter.

The auxiliary receiver **20** is an additional receiver that is included within the mobile wireless communications device **10** that may advantageously be used to service the needs of the transmitter **16.** Estimation and compensation for IQ imbalance and DC offset are examples of servicing the needs of the transmitter **16,** as will be appreciated by those skilled in the art.

The auxiliary receiver **20** can be of lower performance as compared to the main receiver **18** since it is primarily designed to serve the transmitter. For example, the auxiliary receiver **20** does not need to have a high dynamic range like the main receiver **18,** nor a high selectivity. Alternatively, the main receiver **18** may operate in place of the auxiliary receiver to provide the same function if the standard allows for a time-division duplex (TDD) operation in which the main receiver is generally not needed when the transmitter **16** is operating.

The auxiliary receiver **20** is configured to have an independent, dedicated phase-locked loop that is offset from the local oscillator operating the transmitter **16.** This advantageously allows the transmitter impairment to be separated in the frequency domain from the impairments added in the auxiliary receiver **20.** If the main receiver **18** is a TDD receiver to provide the function of the auxiliary receiver **20,** then this implies that it should operate with its own independent PLL.

Otherwise, if the transmitter **16** and the auxiliary receiver **20** were to use the same local oscillator with no frequency offset, then the IQ imbalance of the auxiliary receiver becomes indistinguishable from the IQ imbalance introduced in the transmitter. The DC offsets introduced in the auxiliary receiver **20** also become indistinguishable from the offsets introduced in the transmitter **16.**

The mobile wireless communications device **10** may be a multi-frequency band device that operates over a 2.4 GHz frequency band (i.e., approximately 2.4 to 2.483 GHz) and over a 5 GHz frequency band (i.e., approximately 4.9 to 6 GHz), for example. Depending on the intended application, the mobile wireless communications device **10** may operate over other frequency bands, as readily appreciated by those skilled in the art.

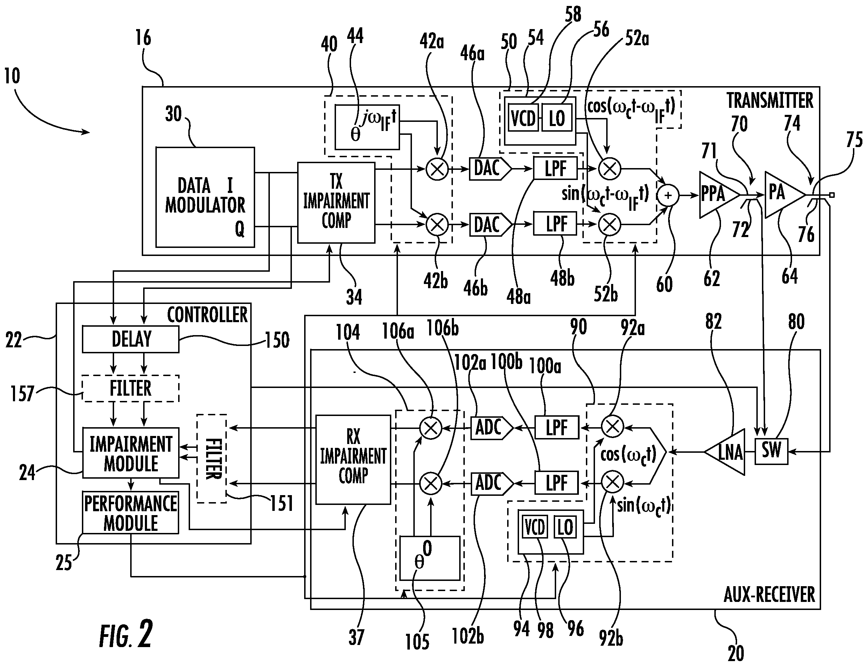

The mobile wireless communications device **10** will now be discussed in greater detail with reference to FIG. 2. The transmitter **16** includes a data modulator **30** that modulates data to be transmitted and provides a digital in-phase (I) component signal and a digital quadrature-phase (Q) component signal to the transmitter **16.**

The transmitter **16** is configured as a low-IF transmitter (i.e., dual-mixer mode) since it includes a two mixer stages, wherein the first mixer stage **40** operates at an intermediate frequency (IF), and the second mixer stage **50** operates at the desired carrier frequency offset by the intermediate frequency so that the resulting frequency of the RF modulated signal to be transmitted is at the desired carrier frequency. The dual-mixer mode allows the output spectrum of the transmitter **16** to be offset with respect to the frequency of the local oscillator associated with the second mixer stage. This significantly helps to reduce VCO pulling by the power amplifier **64.**

The first mixer stage **40** includes a pair of mixers **42a, 42b** that receive the digital I and Q component signals and multiplies them by a complex exponential **44.** The first mixer stage **40** translates the digital I and Q component signals in frequency to an intermediate frequency $\omega_{IF}$. The translated digital I and Q component signals are applied to digital-to-analog converters **46a, 46b.** The resulting translated analog I and Q component signals are then filtered using low pass filters **48a, 48b.**

The second mixer stage **50** includes a pair of mixers **52a, 52b** that receive the translated analog I and Q component signals at the intermediate frequency $\omega_{IF}$, and I and Q local oscillator signals at a frequency of $\omega_c$-$\omega_{IF}$ from a transmit phase-locked loop **54.** The transmit phase-locked loop **54** includes a local oscillator **56** and a voltage controlled oscillator **58** coupled thereto. The frequency $\omega_c$-$\omega_{IF}$ is the desired carrier frequency $\omega_c$ offset by the intermediate frequency $\omega_{IF}$. The output of the second mixer stage **50** is the RF modulated I component signal and the RF modulated Q component signal at the desired carrier frequency $\omega_c$.

A summer **60** sums the outputs of the second mixer stage 50 to provide the RF modulated signal at the carrier frequency $\omega_c$. The low-IF transmitter architecture shown in FIG. 2 allows the local oscillator **56** of the transmit phase-locked loop **54** to be placed at an offset to the carrier frequency of the modulated signal.

The modulated signal from the summer **60** is amplified with a pre-power amplifier (PPA) **62.** The pre-power amplifier **62** is used to insure that there is enough power to drive the power amplifier (PA) **64.** The output of the power amplifier **64** is coupled to the antenna **19.** The output of the power amplifier **64** has a spectrum that is offset with respect to the frequency of the local oscillator **56.** This significantly helps to reduce VCO pulling by the power amplifier **64.**

Reducing VCO pulling is a design challenge for deep sub-micron transceivers **14** that have small feature sizes and cannot provide enough isolation between the output of the power amplifier **64** and the VCO **58.** The output of the power amplifier **64** may be up to 27 dBm, for example. At high output powers, various couplings in the transceiver **14** and the circuit boards therein create an aggressing signal at the VCO **58** which "pulls" the VCO, thereby forcing the local oscillator **56** to momentarily follow the output of the power amplifier **64** and violate phase noise specifications, before the transmit phase-locked loop **54** fights it off.

The low-IF transmitter advantageously helps to reduce VCO pulling by offsetting the frequency of the local oscillator **56** $\omega_c$-$\omega_{IF}$ and the frequency of the RF modulated signal $\omega_c$ output by the power amplifier **64.** The more separated in frequency these signals are, then the more the VCO pulling is reduced. However, there is now an added requirement that the RF modulated signal output from the power amplifier **64** still needs to meet certain design specifications, such as a high IQ balance and DC offset. This means that impairments in the transmitter **16** need to estimated and compensated. Typically, the analog circuitry in the transmit chain within the transmitter **16** causes such impairments.

If the IF frequency is selected to be zero, the first mixer **42a/42b** does not up-convert, but rather multiplies the baseband I/Q signals with unity. The second mixer **52a, 52b** up-converts using the local oscillator frequency $\omega_c$-$\omega_{IF}$=$\omega_c$-$0$=$\omega_c$. Hence, in this selection, the transmitter **16** becomes single-mixer transmitter with zero IF frequency.

During background calibration, the transmitter **16** is configured as a zero-IF transmitter (i.e., single-mixer mode) wherein the first mixer stage **40** operates at an intermediate frequency (IF) of zero, and the second mixer stage **50** operates at the desired carrier frequency. The single-mixer mode directly places the output spectrum of the transmitter **16** at the desired carrier frequency. This mode is turned on for power levels of the transmitter where VCO pulling is not a concern. This mode is used to adaptively update the degradation estimates in the background in anticipation of the low-IF mode, when it will be turned on for higher output powers.

As will now be explained, a time domain approach is used to estimate the transmit impairment (e.g., IQ imbalance and DC offset) in the transmitter **16.** This requires the RF modulated signal with the transmit impairment generated by the transmitter **16** for transmission to be feed back to the auxiliary receiver **20.**

The auxiliary receiver **20** is configured to downconvert the RF modulated signal having the transmit impairment. Since the auxiliary receiver **20** also includes analog circuitry in the receive chain, a receive impairment is added along with the transmit impairment. The receive impairment is to be spectrally separated from the transmit impairment.

The RF modulated signal having the transmit impairment from the transmitter **16** is provided to the auxiliary receiver **20** using a non-directional coupler **70** coupled between the pre-power amplifier **62** and the power amplifier **64.** Alternatively, a non-directional coupler **74** may be coupled between the power amplifier **64** and the antenna **19.**

An advantage of using a non-directional coupler **72, 74** is that it can operate over a wide band of operation, and its performance remains well controlled over temperature and frequency changes. In addition, a non-directional coupler **70, 74** prevents the local oscillator of the auxiliary receiver **20** from parasitically coupling to the output of the transmitter **16.**

A switch in the auxiliary receiver **20** is operated to select which non-directional coupler **70, 74** is to provide the RF modulated signal having the transmit impairment. The selected non-directional coupler **70, 74** directs a small amount of signal energy from the antenna to the auxiliary receiver **20.**

In one embodiment, the non-directional coupler **70** comprises a signal path conductor **71** and a feedback path conductor **72** inductively coupled thereto, and the non-directional coupler **74** also comprises a signal path conductor **75** and a feedback path conductor **76** inductively coupled thereto.

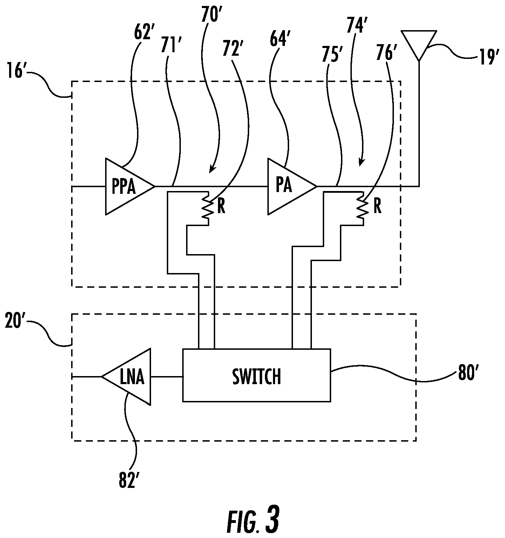

In another embodiment, as illustrated in FIG. 3, the non-directional coupler **70'** is a resistor **72'** directly connected to the transmitter output node and feeds to the LNA **82'** of the auxiliary receiver **20'.** Since the impedance looking into the PPA output and PA input is two 50ohm impedances in parallel, a 500-10,000 ohm resistance can be used to directly connect the LNA input to this output node. Alternatively, the PA output can also drive the LNA input. Any of the two drivers can be selected by using a switched LNA or a switch before the LNA that can provide the desired connection under software control.

Instead of using a non-directional coupler, it is possible to use a directional coupler. The use of a directional coupler provides a steady feedback signal independent of the VSWR variation at the antenna or the PPA load. However, a non-directional coupler is preferred because it is wideband and simpler to implement.

The RF modulated signal having the transmit impairment is received by the switch **80.** The switch **80** is operated by the controller **22.** The RF modulated signal is provided to a low noise amplifier **82.** The output of the low noise amplifier **82** is provided to a first mixer stage **90.** The auxiliary receiver **20** is configured as a 0-IF receiver (i.e., single-mixer mode) since the transmitter **16** is configured as a low-IF transmitter (i.e., dual-mixer mode). This means that the second mixer stage **104** is not needed and is selectively set to a value of 1 (i.e., $e^{j0}$) by the controller **22.** In a different embodiment, the switch 80 can be combined with the LNA to provide two input pairs, one of which is selected under software control.

The mixer stage **90** includes a pair of mixers **92a, 92b** that receive the RF modulated signal having the transmit impairment, and I and Q local oscillator signals from a receive phase-locked loop **94.** The receive phase-locked loop **94** includes a local oscillator **96** and a voltage controlled oscillator **98** coupled thereto.

The frequency of the RF modulated signal having the transmit impairment is $\omega_c$. Since the frequency of the local oscillator **56** in the transmitter **16** is $\omega_c$-$\omega_{IF}$, the frequency of the local oscillator **96** in the auxiliary receiver **20** is $\omega_c$-$\omega_{IF}$. As noted above, the auxiliary receiver **20** is configured to have an independent, dedicated phase-locked loop **96** that is offset from the local oscillator **56** operating the transmitter **16.** This advantageously allows the transmitter impairment to be separated in the frequency domain from the impairments added in the auxiliary receiver **20.**

The output of the mixers **92a, 92b** provide receive modulated analog I and Q component signals at the intermediate frequency $\omega_{IF}$. These signals are provided to low pass filters **100a, 100b** and then to analog-to-digital converters **102a, 102b** so that the receive baseband modulated analog I and Q component signals are now receive baseband modulated digital I and Q component signals at the intermediate frequency $\omega_{IF}$. The receive baseband modulated digital I and Q component signals at the intermediate frequency $\omega_{IF}$ include the receive impairment spectrally separated from the transmit impairment. These signals are passed through the mixers **106a, 106b.** The second mixer stage **104** translates this complex signal to zero-IF in a second down-conversion operation by frequency $T_{IF}$.

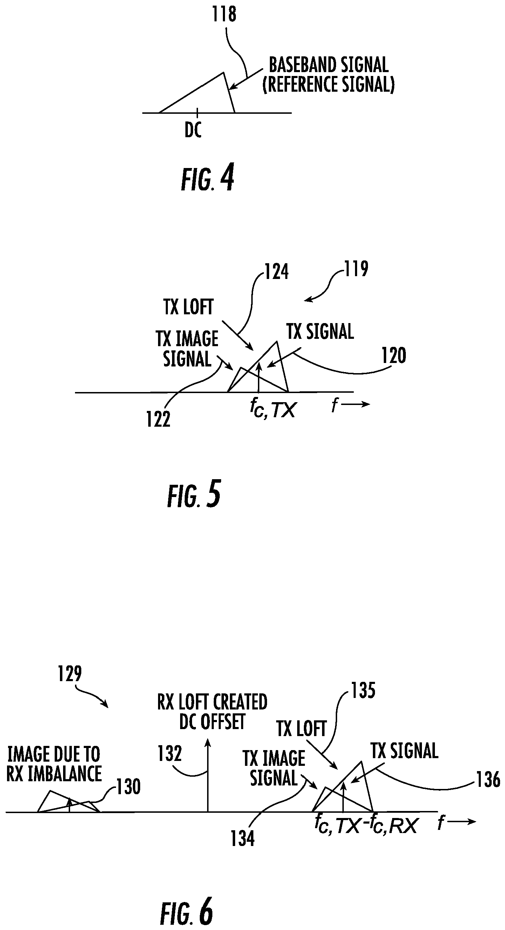

Spectral plots of the transmit baseband modulated signal, the RF modulated signal and the receive baseband modulated signal will now be discussed in reference to FIGS. 4-6. The transmit baseband modulated signal as provided by the data modulator **30** to the transmitter **16** is indicated by reference **118** in FIG. 4. The transmit baseband modulated signal is also referred to as the reference signal since is does not include impairments from the transmitter **16.**

The RF modulated signal which is the transmit baseband modulated signal having been upconverted by the transmitter **16** is indicated by reference **119** in FIG. 5. The RF modulated signal includes the transmit baseband modulated signal and the impairments introduced by the transmitter **16.** The RF modulated signal is also provided to the auxiliary receiver **20.** Within the RF modulated signal **119,** the transmit baseband modulated signal is indicated by reference **120,** an image of the transmit baseband modulated signal is indicated by reference **122.** The image of the transmit baseband modulated signal **122** folds around the carrier frequency of the transmitter ($f_{c,TX}$), and the transmit local oscillator feedthrough (LOFT) **124** appears as a tone that can cause violation of the origin offset error at low output powers.

The receive baseband modulated signal as provided by the auxiliary receiver **20** is indicated by reference **129** in FIG. 6. The receive baseband modulated signal includes the transmit baseband modulated signal as well as the receive impairment spectrally separated from the transmit impairment. Since the receiver is a low-IF receiver, the degradations due to the auxiliary receiver **20** as indicated by references **130, 132** are now spectrally offset from the degradations due to the transmitter **16**. The degradations due to the transmitter **16** are indicated by references **134, 135.** The transmit baseband modulated signal is indicated by reference **136.**

In the illustrated example of the mobile wireless communications device **10** in FIG. 2, the transmitter **16** comprises two mixer stages **40, 50,** and the auxiliary receiver **20** also comprises two mixer stages **90, 104.** During calibration both of the mixer stages **90, 104** are operational for translating the received baseband modulated signal. The first mixer stage **40** in the transmitter **16** is selectively set to a value of 1 (i.e., e$^0$) by the controller **22.**

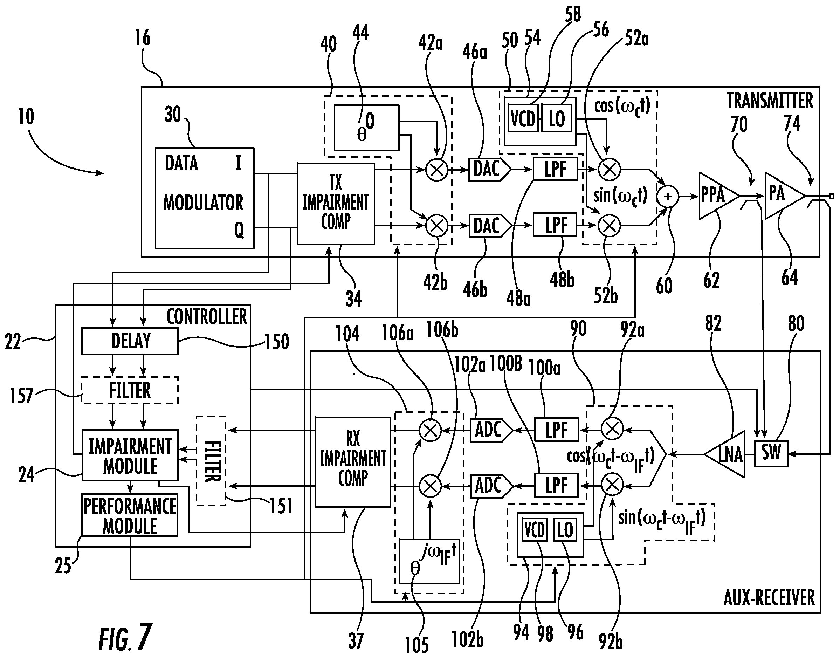

Only one of the mixer stages **50** in the transmitter **16** may be operational for translating the transmit baseband modulated signal, as illustrated in FIG. 7. The other mixer stage **40** is not needed and is selectively set to a value of 1 (i.e., e$^0$) by the controller 22.

When the transmitter **16** is operating in the dual-mixer mode, this helps to fight VCO pulling when the power amplifier **64** is operating at high power. When the power amplifier **64** is operating at low power, then the transmitter **16** may be configured to operate in the single-mixer mode. In either case, the local oscillator **96** in the auxiliary receiver **20** is offset from the local oscillator **66** in the transmitter **16.**

Compensation of the transmitter **16** will now be discussed in greater detail. The controller **22** is configured to perform the estimating during operation of the transmitter **16** while transmitting data. Special tones or calibration signals are not required. Instead, data transmitted during normal operation of the transmitter **16** is used.

As illustrated in FIG. 2, the controller **22** is coupled to the output of the data modulator **30** and to the output of the auxiliary receiver **20.** The controller **22** receives the transmit baseband modulated signal, as indicated by reference **118** in FIG. 4. The transmit baseband modulated signal is also referred to as the reference signal since it does not include impairments from the transmitter **16.**

The controller **22** also receives the receive basseband modulated signal as provided by the auxiliary receiver **20,** as indicated by reference **129** in FIG. 6. The receive baseband modulated signal includes the transmit baseband modulated signal as well as the receive impairment spectrally separated from the transmit impairment.

The controller **22** includes a delay circuit **150** configured to delay the transmit baseband modulated signal so that this signal and the receive baseband modulated signal match up in time when compared. The delay circuit **150** may be configured to implement a fixed delay corresponding to inherent delays of the transmitter **16** and the auxiliary receiver **30,** and a variable delay corresponding to variable environmental conditions. The variable delay accounts for environmental conditions, such as operating temperature variations, for example. In particular, the analog sections within the transmitter **16** and the auxiliary receiver **20** are effected by temperature variations.

The impairment module **24** within the controller **22** estimates impairment within the transmitter **16,** and generates an impairment compensation signal for the transmitter based on the estimated transmit impairment. The transmitter **16** includes a transmit impairment compensator **34** configured to compensate the transmit baseband modulated signal based on the compensation signal. The transmit impairment compensator **34** is positioned between the data modulator **30** and the first mixer stage **40.** Alternatively, the transmit impairment compensator **34** may be implemented within the controller itself if the transmitter chain is routed through the controller **22.**

The impairment module **24** is configured to estimate the transmit impairment by comparing the transmit baseband modulated signal with the receive baseband modulated signal while ignoring the receive impairment. The impairment module **24** performs the comparing in a plurality of iterations to determine difference values therebetween. The transmit impairment compensator **34** then performs the compensation by iteratively adding correction values, as provided by the compensation signal, to the transmit baseband modulated signal to compensate for the difference values from the plurality of iterations. A least means square (LMS) algorithm may be used to determine the compensation values, for example.

The impairment module **24** may be implemented within a processor, for example, as appreciated by those skilled in the art. The impairment module **24** is configured to estimate IQ imbalance and local oscillator feedthrough, and will be discussed as an inverse system modeling problem. Output of the impairment module **24** is modeled based on the following equation:

$$y(n) = w_1 \cdot x(n) + w_2 \cdot x^*(n) + dc$$

The transmit baseband modulated signal is represented by x(n), and an image of the transmit baseband modulated signal is represented by x*(n). Weighting or gain values are represented by $w_1$ and $w_2$, and are complex numbers. A dc term is also included in the equation.

The weighting value $w_1$ embodies the path gain from the digital representation of the ideal transmit baseband modulated signal to the digitized receive baseband modulated signal at the output of the auxiliary receiver **20.** The absolute value of $w_1$ is the ratio $w_2/w_1$ and dc/$w_1$ that needs to receive the appropriate compensation. The compensation to $w_1$ can be normalized without any loss in fidelity of the compensation. It is important to keep the feedback gain high enough such that the digital representation of the receive baseband modulated signal from the auxiliary receiver **20** spans almost the full dynamic range of the analog-to-digital converters **102a, 102b.** This provides a high signal to noise ratio and allows a high image and local oscillator feedthrough to be achieved. The error signal is given based on the following equation:

$$e(n) = d(n) - y(n) = d(n) - w_1 \cdot x(n) - w_2 \cdot x^*(n) - dc$$

The desired response is represented by d(n). Using the steepest descent approach, the following is obtained:

$$\frac{\partial}{\partial w_1} e(n) = -x^*(n)$$

$$\frac{\partial}{\partial w_2} e(n) = -x(n)$$

$$\frac{\partial}{\partial dc} e(n) = -1$$

Therefore, the update equations are as follows:

$$w_1(n+1) = w_1(n) + \mu \cdot e(n) \cdot x^*(n)$$

$$w_2(n+1) = w_2(n) + \mu \cdot e(n) \cdot x(n)$$

$$dc(n+1) = dc(n) + \mu \cdot e(n))$$

On convergence, the error signal is driven to zero so that $y(n) = d(n)$ in a mean square sense. Now, the inverse function has been calculated.

The transmit impairment estimation may include the use of a very selective low pass filter. The low pass filter may be a single stage and be programmable with the following transfer function:

$$H_2(z) = \frac{2^{-M}}{1 - (1 - 2^{-M})z^{-1}}$$

where M is programmable from 0-10. This filter has unity gain at dc. The reference signal for determining the IQ imbalance and dc offsets introduced by the receiver may be determined using synthesis. The output signal of the impairment module **24** may be synthesized as follows:

$$y(n) = x(n) + \frac{w_2}{w_1} \cdot x^*(n) + \frac{dc}{w_1} \cdot$$

This creates the reference signal centered at dc. This signal is up-converted to the low pass filter to create the reference signal needed to compute the impairments introduced in the auxiliary receiver **20.**

Operation of the impairment module **24** may be simplified based on additional filtering of the receive baseband modulated signal before being provided as an input to the impairment module **24.** In the above embodiment, the controller **20** typically includes a filter **151** that needs to be large enough to pass the transmit impairment portion of the signal while rejecting the receive impairment portion of the signal. After the second down-conversion in the auxiliary receiver **20,** the tranmit impairment signal **136** centers at DC and can be isolated from the receiver impairments using a lowpass filter. This filter **151,** isolates the transmit impairment signal so that the controller **22** can compare it to the ideal reference signal (output of **150**) and estimate the impairments using the LMS algorithm or a different method.

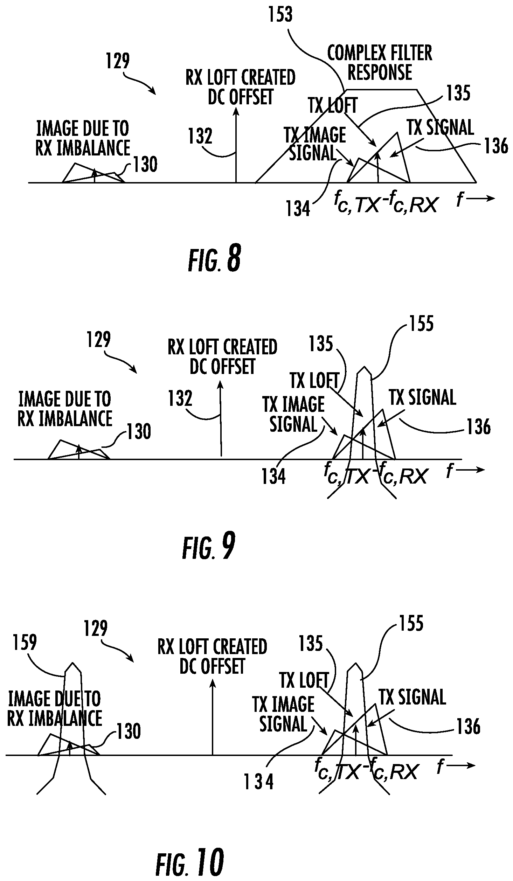

In another embodiment of this filter **151,** a complex filter may be used. The complex filter has a response **153** as illustrated in FIG. 8. The complex filter is used to select the positive frequencies, which are then provided to the impairment module **24** after translating the positive frequencies at zero-IF.

As an alternative to the complex filter, a lossy integrator may filter the zero-IF down-converted signal which is output from the second down-conversion stage **104** in the auxiliary receiver **20.** This filter can be implemented very simply to have a cascade of filters, each with a single-pole IIR response. This filter implementation is inexpensive, yet very powerful. The filtering operation modifies the in-band frequency components of the auxiliary receiver output signal. Hence, it may be compared to a similarly modified reference signal (i.e., the ideal transmit signal from the data modulator **30**). The filter **157** is identical to the filter **151,** and hence modifies the reference signal in the same way as the filter **151** modifies the output of the auxiliary receiver output signal. The same LMS update equations can be used to estimate the impairments caused in the transmitter.

The impairment module **24** may also be used to estimate and generate a receive impairment compensation signal to correct for impairments within the auxiliary receiver **20.** The auxiliary receiver **20** includes a receive impairment compensation signal for the receive impairment compensator **37** within the auxiliary receiver **20.**

The receive impairment compensator **37** is positioned at the output of the last mixing stage. Alternatively, the receive impairment compensator **37** may be implemented within the controller itself if the receive chain is routed through the controller **22.** As discussed above for the estimation and compensation of the transmit impairment, an inverse system modeling is also used for the receive impairment

As discussed above, complex filtering and very selective complex lossy integrator filtering may be used to provide inputs to the impairment module **24.** In addition, the receive impairment may be estimated without requiring the transmit baseband modulated signal. Instead, a very selective complex lossy integrator may be used to extract a portion of the signal spectrum centered at the positive intermediate frequency, and a very selective complex lossy integrator may be used to extract a portion of the signal spectrum centered at the negative intermediate frequency. The complex lossy integrators have responses **155, 159** as illustrated in FIG. 10.

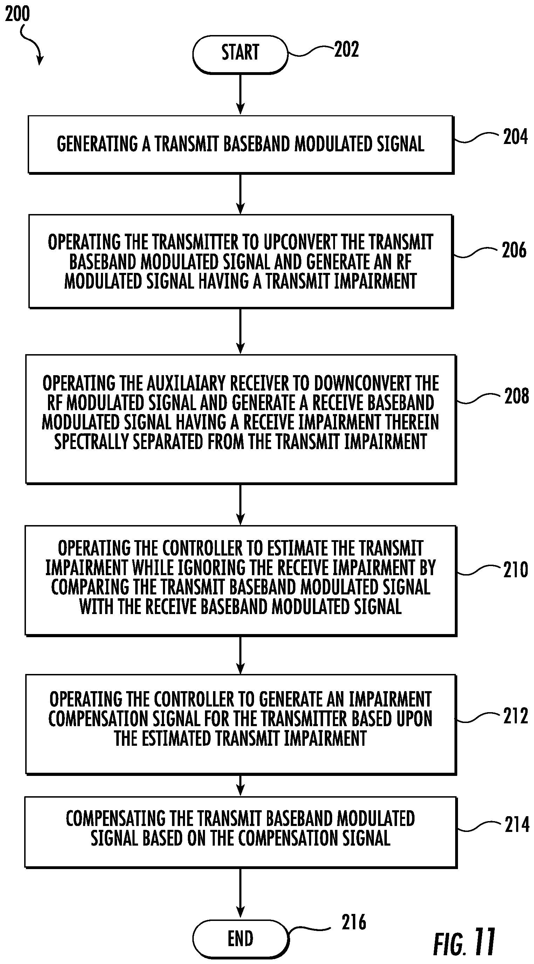

A flowchart **200** illustrating a method for operating a mobile wireless communications device **10** while taking into account impairment compensation will now be discussed in reference to FIG. 11. From the start (Block **202**), the method comprises generating a transmit baseband modulated at Block **204.** The transmitter **16** is operated at Block **206** to upconvert the transmit baseband modulated signal and generate an RF modulated signal having a transmit impairment. The auxiliary receiver **20** is operated at Block **208** to downconvert the RF modulated signal and generate a receive baseband modulated signal having a receive impairment therein spectrally separated from the transmit impairment. The controller **22** is operated at Block **210** to estimate the transmit impairment while ignoring the receive impairment by comparing the transmit baseband modulated signal with the receive baseband modulated signal, and is operated at Block **212** to generate an impairment compensation signal for the transmitter **16** based upon the estimated transmit impairment. The transmitter **16** compensates the transmit baseband modulated signal at Block **214** based on the compensation signal. The method ends at Block **216.**

After the above described impairment has been estimated and compensation has been applied to the mobile wireless communications device **10,** performance of the device can then be monitored, and if necessary, tuned to improve performance. This is advantageously performed without the need for special test signals or external test equipment. Performance monitoring and tuning may be performed during operation of the transmitter while transmitting data. However, this exemplary aspect can be practiced without having to perform the above described impairment estimation and compensation, as readily appreciated by those skilled in the art.

As illustrated in FIG. 2, a performance monitoring module **25** is included in the controller **22** along with the impairment module **24.** The transmitter **16** is selectively operable based on a control signal between the single-mixer mode and the dual-mixer mode to upconvert a transmit baseband modulated signal and generate an RF modulated signal having a transmit impairment.

The auxiliary receiver **20** is also selectively operable based on the control signal between the single-mixer mode, when the transmitter **16** is in the dual-mixer mode, and the dual-mixer mode, when the transmitter is in the single-mixer mode, to downconvert the RF modulated signal and generate a receive baseband modulated signal having the transmit impairment. In particular, the auxiliary receiver **20** is selectively operable in the single-mixer mode when the transmitter **16** is selectively operable in the dual-mixer mode, and in the dual-mixer mode when the transmitter is selectively operable in the single-mixer mode.

The performance module **25** within the controller **22** compares the transmit baseband modulated signal to the transmit impairment to determine an error difference therebetween, and generate the control signal based on the error difference. The error difference corresponds to an error vector magnitude (EVM), and the performance module **25** then derives a signal-to-noise ratio (SNR) of the RF modulated signal based on the EVM.

Although not illustrated, the mobile wireless communications device **10** may also include an auxiliary transmitter along with the auxiliary receiver **20.** The auxiliary transmitter may be used for determining impairment compensation of the receiver. The same principles discussed herein are equally applicable to the auxiliary transmitter and the main receiver **18,** as readily appreciated by those skilled in the art.

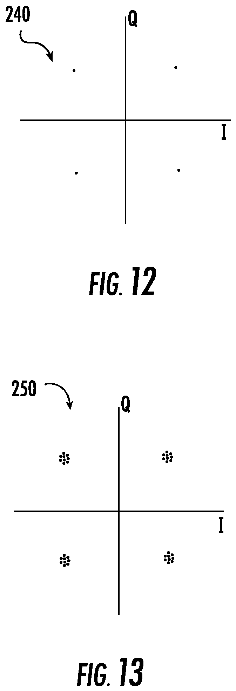

The EVM is also referred to as a receive constellation error (RCE), and is a measure used to quantify the performance of a digital radio transmitter or receiver. A signal sent by an ideal transmitter or received by a receiver with a zero EVM would have all constellation points **240** precisely at the ideal locations, as illustrated in FIG. 12. However, various imperfections in the implementation (such as DC offset and IQ imbalance) cause the actual constellation points **250** to deviate from the ideal locations, as illustrated in FIG. 12. Essentially, EVM is a measure of how far the points are from the ideal locations. The controller **22** is configured to estimate a bit error rate (BER) of the RF modulated signal based on the SNR.

The RF modulated signal is generated at a carrier frequency, and the transmitter **16** is selectively configured to operate in the dual-mixer mode and comprises a first mixer stage **40** operating at the carrier frequency minus an intermediate frequency, and a second mixer stage **50** operating at the intermediate frequency. In this configuration, the auxiliary receiver **20** is selectively configured to operate in the single-mixer mode and comprises a mixer stage **90** operating at the carrier frequency.

In another configuration, the transmitter **16** is selectively configured to operate in the single-mixer mode and comprises a mixer stage **50** operating at the carrier frequency. The auxiliary receiver **20** is selectively configured to operate in the dual-mixer mixer and comprises a first mixer stage **90** operating at the carrier frequency minus an intermediate frequency, and a second mixer stage **104** operating at the intermediate frequency.

When the transmitter **16** is operating in the dual-mixer mode, this is advantageous when transmitting data at a high output power while fighting VCO pulling. However, if performance of the transmitter **16** begins to decline, then the transmitter may be selected to operate in the single-mixer mode while transmitting at low power. In this mode, the transmitter **16** may be recompensated if necessary so that the performance of the transmitter is improved.

If the auxiliary receiver **20** is operating in the dual-mixer mode, then this is advantageous for estimating the impairments created in the transmitter **16** and in the auxiliary receiver, which in turn may be used when compensating the transmitter or the auxiliary receiver. Once the impairments have been compensated in the auxiliary receiver **20,** then the auxiliary receiver may advantageously be operated in the single-mixer mode.

As noted above, the performance module **25** is able to derive a SNR of the RF modulated signal based on the EVM. The following ratio provides the relationship between EVM and SNR:

$$SNR \approx \frac{1}{EVM^2}$$

The derived SNR can be used to predict the BER using a waterfall curve for the corresponding modulation or through a look up table containing entries that specify BER versus SNR. Computation of EVM for the transmitter **16** and receiver **20** is performed on-the-fly while the transmitter and receiver function normally. This is useful in assessing if the analog tuning exercised is effective in improving the overall performance of the transceiver **16.**

There are several analog controls that are exercised to control offsets, IQ imbalance, group delay distortion and in-band droop. These are controlled by independent algorithms that are implemented in HW or SW or a combination of two. In addition, selection of the transmitter **16** between a single-mixer mode and a dual-mixer mode is another approach for tuning performance of he transmitter. In order for the receive impairment to be spectrally spaced from the transmit impairment in the receive baseband modulated signal, the auxiliary receiver **20** needs to operate in a mode that is different from the mode of the transmitter **16.**

Although not illustrated, the mobile wireless communications device **10** may also include an auxiliary transmitter along with the auxiliary receiver **20.** The auxiliary transmitter may be used for determining impairment compensation of the main receiver **18.** The same principles discussed herein are equally applicable to the auxiliary transmitter and the main receiver **18,** as readily appreciated by those skilled in the art. For example, the impairments created in the auxiliary transmitter can be separated from the impairments created in the main receiver **18.**

EVM calculation will now be discussed. An error vector is a vector in the I-Q plane between the ideal constellation point and the point received by the receiver. In other words, it is the difference between actual received symbols and ideal symbols. The average power of the error vector, normalized to signal power, is the EVM. A transmitter **16** to auxiliary receiver **20** feedback link can be modeled as a basic AWGN channel. If the received signal is time aligned to the transmitted signal, the EVM is defined as:

$$EVM = \frac{\frac{1}{N}\sum_{n=1}^{N}\left|S_{RX,n} - S_{TX,n}\right|^2}{\frac{1}{N}\sum_{n=1}^{N}\left|S_{TX,n}\right|^2}$$

where $S_{TX,n}$ and $S_{RX,n}$ represent the normalized nth transmitted and received symbols, respectively. This is calculated as

$$EVM_{RMS} = \sqrt{\frac{\frac{1}{N}\sum_{n=1}^{N}[I_{RX} - I_{TX}]^2 + [Q_{RX} - Q_{TX}]^2}{\frac{1}{N}\sum_{n=1}^{N}\left[I_{TX}^2 + Q_{TX}^2\right]}}$$

In the above equation, the received constellation is normalized to the received samples while the transmitted constellation is normalized to transmit samples. Therefore, the analog gain is taken out of the EVM estimate. The performance module **25** uses the error samples from an LMS algorithm as the error vector in the numerator of the EVM estimate after the algorithm has converged. This advantageously achieves elimination of the IQ imbalance, elimination of offsets from the received samples. In addition, the received constellation to the transmit constellation is matched such that the difference between the two (error vector) is minimum. Achieving normalization operations on receive samples is achieved through gain adjustment (i.e., determining $w_1$).

The average power of the transmit samples and the error vector are calculated separately. The two summations ($P_{error}$ and $P_{TX}$) are reported to the performance module **25,** which in turn, estimates the EVM. Percent EVM can then be computed as:

$$EVM(\%) = \sqrt{\frac{P_{error}}{P_{TX}}} \times 100\%$$

If the LMS algorithm is reasonably converged and the average error and signal powers are computed over sufficiently large number of samples, the signal-to-noise ratio is approximated as:

$$SNR \approx \frac{1}{EVM^2}$$

The BER can be predicted as an appropriate Q-function based on the measured SNR. BER is traditionally computed on a communication link by demodulating the received samples and comparing the decisions to the transmitted samples. In this approach, the BER can be predicted by using a Q-function implemented with a lookup table combined with interpolation without the need for demodulation. In a radio transceiver, the SNR is a more useful metric compared to BER, which is more relevant to assessing the quality of a complete radio link. Using the SNR, the noise figure of the link can be checked to see if is reasonable. Any asymmetry in the noise power of I and Q errors also indicates imbalance that needs to be adjusted.

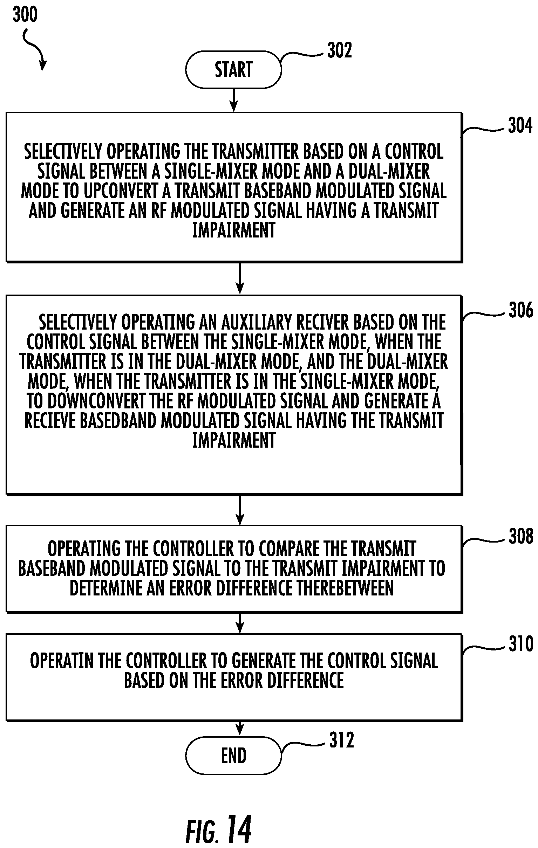

A flowchart **300** illustrating a method for operating a mobile wireless communications device **10** while taking into account performance evaluation will now be discussed in reference to FIG. 14. From the start (Block **302**), the method comprises selectively operating the transmitter **16** at Block **304** based on a control signal between a single-mixer mode and a dual-mixer mode to upconvert a transmit baseband modulated signal, and generate an RF modulated signal having a transmit impairment. The auxiliary receiver **20** is selectively operated at Block **306** based on the control signal between the single-mixer mode, when the transmitter **16** is in the dual-mixer mode, and the dual-mixer mode, when the transmitter is in the single-mixer mode, to downconvert the RF modulated signal, and generate a receive baseband modulated signal having the transmit impairment. The method further comprises operating the controller **22** at Block **308** to compare the transmit baseband modulated signal to the transmit impairment to determine an error difference therebetween, and generate the control signal based on the error difference at Block **310**. The method ends at Block **312.**

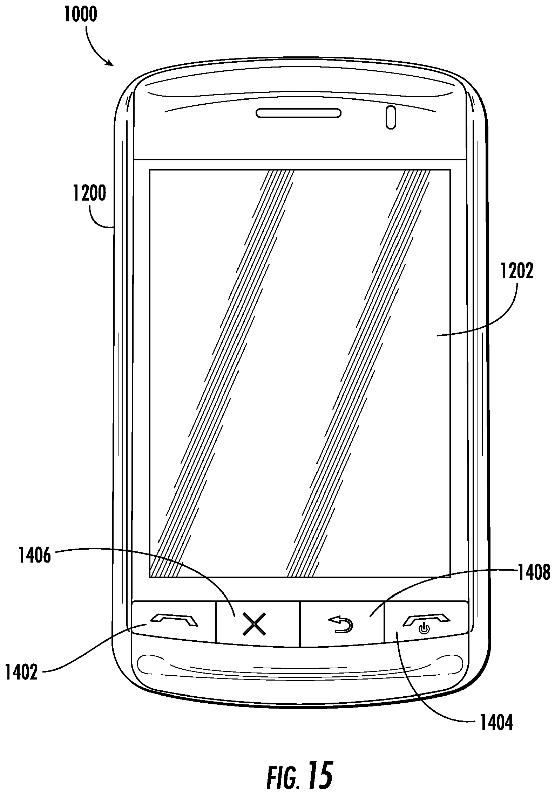

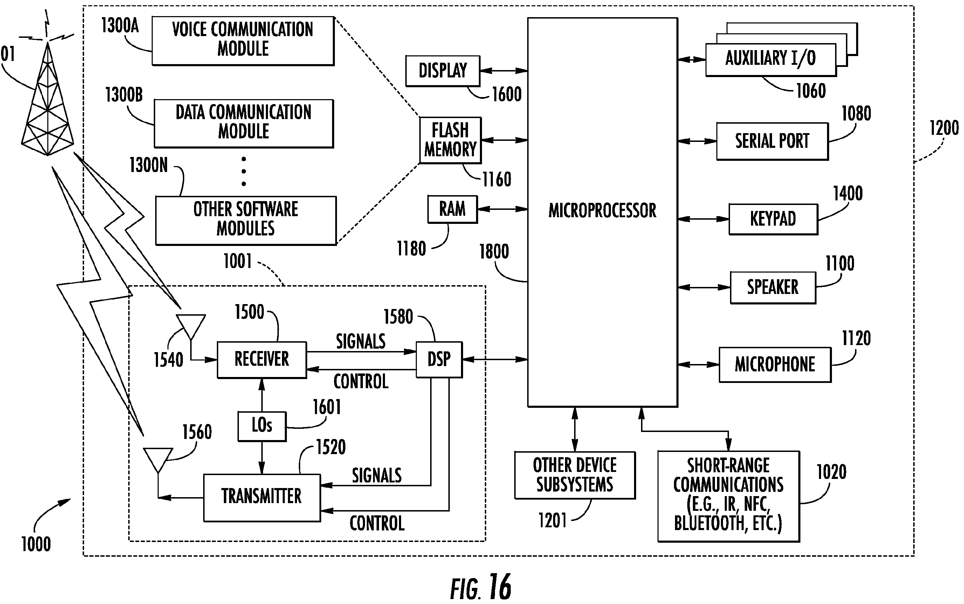

Exemplary components that may be used in various embodiments of the above-described mobile wireless communications device are now described with reference to an exemplary mobile wireless communications device **1000** shown in FIGS. 15 and 16.

The mobile wireless communications device **1000** illustratively includes a portable housing **1200,** a keypad **1400** and an output device 1600. The output device shown is a display **1600,** which may comprise a full graphic LCD. In some embodiments, display **1600** may comprise a touch-sensitive input and output device. Other types of output devices may alternatively be utilized. The keypad **1400** includes a plurality of control keys including an "off hook" (i.e., initiate phone call) key **1402,** an "on hook" (i.e., discontinue phone call) key **1404,** a menu key **1406,** and a return or escape key **1408.**

A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad **1400** may include a mode selection key, or other hardware or software for switching between text entry and telephony entry.

In addition to the processing device **1800,** other parts of the mobile device **1000** are shown schematically in FIG. 16. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications or modules **1300A-1300N** on the device **1000,** such as software modules for performing various steps or operations. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth'm communications module to provide for communication with similarly-enabled systems and devices.

**Claims**

1. A mobile wireless communications device (10) comprising:

   a portable housing (12);
   a transceiver (14) comprising a transmitter (16) and a receiver (18) carried by said portable housing (12), said transmitter (16) configured to upconvert a transmit baseband modulated signal and generate an RF modulated signal having a transmit impairment;
   an auxiliary receiver (20) carried by said portable housing (12) and coupled to said transmitter (16) and configured to downconvert the RF modulated signal and generate a receive baseband modulated signal having a receive impairment therein spectrally separated from the transmit impairment; and
   a controller (22) carried by said portable housing (12) and coupled to said transmitter (16) and said auxiliary receiver (20), said controller (22) configured to

      estimate the transmit impairment while ignoring the receive impairment based on comparing the transmit baseband modulated signal with the receive baseband modulated signal, and
      generate a transmit impairment compensation signal based upon the estimated transmit impairment;

   said transmitter (16) comprising a transmit local oscillator operating at a first frequency, and said auxiliary receiver (20) comprising a receive local oscillator operating at a second frequency offset from the first frequency.

2. The wireless communications device (10) according to Claim 1 wherein said controller (22) is configured to perform the estimating and generating during operation of said transmitter (16) while transmitting data.

3. The wireless communications device (10) according to Claim 1 wherein the transmit baseband modulated signal comprises an in-phase (I) component signal and a quadrature-phase (Q) component signal.

4. The wireless communications device (10) according to Claim 1 wherein said transmitter (16) comprises a transmit impairment compensator configured to compensate the transmit baseband modulated signal based on the transmit impairment compensation signal.

5. The wireless communications device (10) according to Claim 1 wherein said controller (22) comprises a delay circuit configured to delay the transmit baseband modulated signal so that the transmit baseband modulated signal and the receive baseband modulated signal match up in time when compared.

6. The wireless communications device (10) according to Claim 1 wherein said transmitter (16) is configured to operate in a dual-mixer mode; and wherein said auxiliary receiver (20) is configured to operate in a single-mixer mode.

7. The wireless communications device (10) according to Claim 1 wherein said transmitter (16) is configured to operate in a single-mixer mode; and wherein said auxiliary receiver (20) is configured to operate in a dual-mixer mode.

8. The wireless communications device (10) according to Claim 1 further comprising a non-directional coupler carried by said portable housing (12) and coupled between said transceiver (14) and said auxiliary receiver (20).

9. The wireless communications device (10) according to Claim 1 wherein said controller (22) is configured to estimate the receive impairment based on comparing the transmit baseband modulated signal after having been compensated with the receive baseband modulated signal, and generate a receive impairment compensation signal for said auxiliary receiver (20) based upon the estimated transmit impairment; and wherein said auxiliary receiver (20) comprises a receive impairment compensator configured to compensate the receive baseband modulated signal based on the receive impairment compensation signal.

10. A method for operating a
mobile wireless communications device (10) comprising a transceiver (14) comprising a transmitter (16) and a receiver (18), an auxiliary receiver (20) coupled to the transmitter (16), and a controller (22) coupled to the transmitter (16) and the auxiliary receiver (20), the transmitter (16) comprising a transmit local oscillator operating at a first frequency, and the auxiliary receiver (20) comprising a receive local oscillator operating at a second frequency offset from the first frequency, the method comprising:

    generating a transmit baseband modulated signal;
    operating the transmitter (16) to upconvert the transmit baseband modulated signal and generate an RF modulated signal having a transmit impairment; and
    operating the auxiliary receiver (20) to downconvert the RF modulated signal and generate a receive baseband modulated signal having a receive impairment therein spectrally separated from the transmit impairment; and operating the controller (22) to

        estimate the transmit impairment while ignoring the receive impairment based on comparing the transmit baseband modulated signal with the receive baseband modulated signal, and
        generate a transmit impairment compensation signal based upon the estimated transmit impairment.

11. The method according to Claim 10 wherein the controller (22) is configured to perform the estimating and generating during operation of the transmitter (16) while transmitting data.

12. The method according to Claim 10 wherein the transmit baseband modulated signal comprises an in-phase (I) component signal and a quadrature-phase (Q) component signal.

13. The method according to Claim 10 wherein the transmitter (16) comprises a transmit impairment compensator configured to compensate the transmit baseband modulated signal based on the transmit impairment compensation signal.

14. The method according to Claim 10 further comprising delaying the transmit baseband modulated signal so that the transmit baseband modulated signal and the receive baseband modulated signal match up in time when compared.

**Patentansprüche**

1. Mobile drahtlose Kommunikationsvorrichtung (10), enthaltend:

    ein tragbares Gehäuse (12);
    einen Transceiver (14), der einen Sender (16) und einen Empfänger (18) umfasst und in dem tragbaren Gehäuse (12) gehalten ist, wobei der Sender (16) dafür konfiguriert ist, ein moduliertes Sende-Basisbandsignal aufwärtszuwandeln und ein moduliertes HF-Signal mit einer Sendebeeinträchtigung zu erzeugen;
    einen Hilfsempfänger (20), der in dem tragbaren Gehäuse (12) gehalten ist und mit dem Sender (16) gekoppelt ist und dafür konfiguriert ist, das modulierte HF-Signal abwärtszuwandeln und ein moduliertes Empfangs-Basisbandsignal zu erzeugen, das eine Empfangsbeeinträchtigung enthält, die spektral von der Sendebeeinträchtigung getrennt ist; und

eine Steuereinrichtung (22), die in dem tragbaren Gehäuse (12) gehalten ist und mit dem Sender (16) und dem Hilfsempfänger (20) gekoppelt ist, welche Steuereinrichtung (22) dafür konfiguriert ist,

die Sendebeeinträchtigung auf der Grundlage eines Vergleichs des modulierten Sende-Basisbandsignals mit dem modulierten Empfangs-Basisbandsignal zu schätzen, während die Empfangsbeeinträchtigung ignoriert wird, und

auf der Grundlage der geschätzten Sendebeeinträchtigung ein Sendebeeinträchtigungs-Kompensationssignal zu erzeugen;

wobei der Sender (16) einen lokalen Sendeoszillator aufweist, der mit einer ersten Frequenz arbeitet, und der Hilfsempfänger (20) einen lokalen Empfangsoszillator aufweist, der mit einer gegenüber der ersten Frequenz versetzten zweiten Frequenz arbeitet.

2. Drahtlose Kommunikationsvorrichtung (10) nach Anspruch 1, wobei die Steuereinrichtung (22) dafür konfiguriert ist, das Schätzen und Erzeugen während des Betriebs des Senders (16) während der Datenübertragung auszuführen.

3. Drahtlose Kommunikationsvorrichtung (10) nach Anspruch 1, wobei das modulierte Sende-Basisbandsignal ein phasengleiches (I) Komponentensignal und ein Quadraturphasen- (Q) Komponentensignal ist.

4. Drahtlose Kommunikationsvorrichtung (10) nach Anspruch 1, wobei der Sender (16) einen Sendebeeinträchtigungskompensator aufweist, der dafür konfiguriert ist, das modulierte Sende-Basisbandsignal auf der Grundlage des Sendebeeinträchtigungs-Kompensationssignals zu kompensieren.

5. Drahtlose Kommunikationsvorrichtung (10) nach Anspruch 1, wobei die Steuereinrichtung (22) eine Verzögerungsschaltung aufweist, die dafür konfiguriert ist, das modulierte Sende-Basisbandsignal zu verzögern, so dass das modulierte Sende-Basisbandsignal und das modulierte Empfangs-Basisbandsignal beim Vergleichen zeitlich angepasst sind.

6. Drahtlose Kommunikationsvorrichtung (10) nach Anspruch 1, wobei der Sender (16) dafür konfiguriert ist, in einem Dual-Mischermodus zu arbeiten, und wobei der Hilfsempfänger (20) dafür konfiguriert ist, in einem Single-Mischermodus zu arbeiten.

7. Drahtlose Kommunikationsvorrichtung (10) nach Anspruch 1, wobei der Sender (16) dafür konfiguriert ist, in einem Single-Mischermodus zu arbeiten, und wobei der Hilfsempfänger (20) dafür konfiguriert ist, in einem Dual-Mischermodus zu arbeiten.

8. Drahtlose Kommunikationsvorrichtung (10) nach Anspruch 1, ferner enthaltend einen richtwirkungsfreien Koppler, der in dem tragbaren Gehäuse (12) gehalten ist und zwischen den Transceiver (14) und den Hilfsempfänger (20) gekoppelt ist.

9. Drahtlose Kommunikationsvorrichtung (10) nach Anspruch 1, wobei die Steuereinrichtung dafür konfiguriert ist, die Empfangsbeeinträchtigung auf der Grundlage eines Vergleichs des modulierten Sende-Basisbandsignals nach der Kompensation mit dem modulierten Empfangs-Basisbandsignal zu schätzen und ein Empfangsbeeinträchtigungs-Kompensationssignal für den Hilfsempfänger (20) auf der Grundlage der geschätzten Sendebeeinträchtigung zu erzeugen, und wobei der Hilfsempfänger (20) einen Empfangsbeeinträchtigungskompensator aufweist, der dafür konfiguriert ist, das modulierte Empfangs-Basisbandsignal auf der Grundlage des Empfangsbeeinträchtigungs-Kompensationssignals zu kompensieren.

10. Verfahren für den Betrieb einer mobilen drahtlosen Kommunikationsvorrichtung (10), die einen Transceiver (14), der einen Sender (16) und einen Empfänger (18) umfasst, einen Hilfsempfänger (20), der mit dem Sender (16) gekoppelt ist, und eine Steuereinrichtung (22) aufweist, die mit dem Sender (16) und dem Hilfsempfänger (20) gekoppelt ist, wobei der Sender (16) einen lokalen Sendeoszillator aufweist, der mit einer ersten Frequenz arbeitet, und der Hilfsempfänger (20) einen lokalen Empfangsoszillator aufweist, der mit einer gegenüber der ersten Frequenz versetzten zweiten Frequenz arbeitet, welches Verfahren enthält:

Erzeugen eines modulierten Sende-Basisbandsignals;

Betreiben des Senders (16) dergestalt, dass er das modulierte Sende-Basisbandsignal aufwärtswandelt und ein moduliertes HF-Signal mit einer Sendebeeinträchtigung erzeugt; und

Betreiben des Hilfsempfängers (20) dergestalt, dass er das modulierte HF-Signal abwärtswandelt und ein moduliertes Empfangs-Basisbandsignal erzeugt, das eine Empfangsbeeinträchtigung enthält, die spektral von der Sendebeeinträchtigung getrennt ist; und

Betreiben der Steuereinrichtung (22) dergestalt, dass

sie die Sendebeeinträchtigung auf der Grundlage eines Vergleichs des modulierten Sende-Basisbandsignals mit dem modulierten Empfangs-Basisbandsignal schätzt, während sie die Empfangsbeeinträchtigung ignoriert, und

auf der Grundlage der geschätzten Sendebeeinträchtigung ein Sendebeeinträchtigungs-Kompensationssignal erzeugt.

11. Verfahren nach Anspruch 10, wobei die Steuereinrichtung (22) dafür konfiguriert ist, das Schätzen und Erzeugen während des Betriebs des Senders (16) während der Datenübertragung auszuführen.

12. Verfahren nach Anspruch 10, wobei das modulierte Sende-Basisbandsignal ein phasengleiches (I) Komponentensignal und ein Quadraturphasen- (Q) Komponentensignal ist.

13. Verfahren nach Anspruch 10, wobei der Sender (16) einen Sendebeeinträchtigungskompensator aufweist, der dafür konfiguriert ist, das moduliertes Sende-Basisbandsignal auf der Grundlage des Sendebeeinträchtigungs-Kompensationssignals zu kompensieren.

14. Verfahren nach Anspruch 10, wobei die Steuereinrichtung (22) eine Verzögerungsschaltung aufweist, die dafür konfiguriert ist, das modulierte Sende-Basisbandsignal zu verzögern, so dass das modulierte Sende-Basisbandsignal und das modulierte Empfangs-Basisbandsignal beim Vergleichen zeitlich angepasst sind.

**Revendications**

1. Dispositif de communication mobile sans fil (10) comprenant :

un boîtier portable (12) ;

un émetteur-récepteur (14) comprenant un émetteur (16) et un récepteur (18) porté par ledit boîtier portable (12), ledit émetteur (16) étant configuré pour convertir à la hausse un signal d'émission modulé en bande de base et pour générer un signal modulé en RF ayant une dégradation d'émission ;

un récepteur auxiliaire (20) porté par ledit boîtier portable (12) et couplé audit émetteur (16) et configuré pour convertir à la baisse le signal modulé en RF et pour générer un signal de réception modulé en bande de base ayant une dégradation de réception dans celui-ci séparée de manière spectrale de la dégradation d'émission ; et

une unité de commande (22) portée par ledit boîtier portable (12) et couplée audit émetteur (16) et audit récepteur auxiliaire (20), ladite unité de commande (22) étant configurée pour

estimer la dégradation d'émission tout en ignorant la dégradation de réception en se basant sur la comparaison du signal d'émission modulé en bande de base avec le signal de réception modulé en bande de base , et

générer un signal de compensation de dégradation d'émission en se basant sur la dégradation d'émission estimée ;

ledit émetteur (16) comprenant un oscillateur local d'émission fonctionnant à une première fréquence, et ledit récepteur auxiliaire (20) comprenant un oscillateur local de réception fonctionnant à une deuxième fréquence décalée par rapport à la première fréquence.

2. Dispositif de communication sans fil (10) selon la revendication 1, dans lequel ladite unité de commande (22) est configurée pour effectuer l'estimation et la génération pendant le fonctionnement dudit émetteur (16) lors d'une transmission de données.

3. Dispositif de communication sans fil (10) selon la revendication 1, dans lequel le signal d'émission modulé en bande de base comprend un signal de composante en phase (I) et un signal de composante en quadrature de phase (Q).

4. Dispositif de communication sans fil (10) selon la revendication 1, dans lequel ledit émetteur (16) comprend un compensateur de dégradation d'émission configuré pour compenser le signal d'émission modulé en bande de base en se basant sur le signal de compensation de dégradation d'émission.

5. Dispositif de communication sans fil (10) selon la revendication 1, dans lequel ladite unité de commande (22) comprend un circuit à retard configuré pour retarder le signal d'émission modulé en bande de base de sorte que, lorsqu'ils sont comparés, le signal d'émission modulé en bande de base et le signal de réception modulé en bande de base se correspondent dans le temps.

6. Dispositif de communication sans fil (10) selon la revendication 1, dans lequel ledit émetteur (16) est configuré pour fonctionner dans un mode double mélangeur ; et dans lequel ledit récepteur auxiliaire (20) est configuré pour fonctionner dans un mode mélangeur unique.

7. Dispositif de communication sans fil (10) selon la revendication 1, dans lequel ledit émetteur (16) est configuré pour fonctionner dans un mode mélangeur unique ; et dans lequel ledit récepteur auxiliaire (20) est configuré pour fonctionner dans un mode double mélangeur.

8. Dispositif de communication sans fil (10) selon la revendication 1, comprenant en outre un coupleur non directionnel porté par ledit boîtier portable (12) et couplé entre ledit émetteur-récepteur (14) et ledit récepteur auxiliaire (20).

9. Dispositif de communication sans fil (10) selon la revendication 1, dans lequel ladite unité de commande (22) est configurée pour estimer la dégradation de réception en se basant sur la comparaison du signal d'émission modulé en bande de base après avoir été compensé avec le signal de réception modulé en bande de base , et pour générer un signal de compensation de dégradation de réception pour ledit récepteur auxiliaire (20) en se basant sur la dégradation d'émission estimée ; et où ledit récepteur auxiliaire (20) comprend un compensateur de dégradation de réception configuré pour compenser le signal de réception modulé en bande de base en se basant sur le signal de compensation de dégradation de réception.

10. Procédé pour faire fonctionner un dispositif de communication mobile sans fil (10) comprenant un émetteur-récepteur (14) qui comprend un émetteur (16) et un récepteur (18), un récepteur auxiliaire (20) couplé à l'émetteur (16), et une unité de commande (22) couplée à l'émetteur (16) et au récepteur auxiliaire (20), l'émetteur (16) comprenant un oscillateur local d'émission fonctionnant à une première fréquence, et le récepteur auxiliaire (20) comprenant un oscillateur local de réception fonctionnant à une deuxième fréquence décalée par rapport à la première fréquence, le procédé comprenant le fait :

de générer un signal d'émission modulé en bande de base ;
de faire fonctionner l'émetteur (16) pour convertir à la hausse le signal d'émission modulé en bande de base et pour générer un signal modulé en RF ayant une dégradation d'émission ; et
de faire fonctionner le récepteur auxiliaire (20) pour convertir à la baisse le signal modulé en RF et pour générer un signal de réception modulé en bande de base ayant une dégradation de réception dans celui-ci séparée de manière spectrale de la dégradation d'émission ; et
de faire fonctionner l'unité de commande (22) pour estimer la dégradation d'émission tout en ignorant la dégradation de réception en se basant sur la comparaison du signal d'émission modulé en bande de base avec le signal de réception modulé en bande de base , et
générer un signal de compensation de dégradation d'émission en se basant sur la dégradation d'émission estimée.

11. Procédé selon la revendication 10, dans lequel l'unité de commande (22) est configurée pour effectuer l'estimation et la génération pendant le fonctionnement de l'émetteur (16) lors d'une transmission de données.

12. Procédé selon la revendication 10, dans lequel le signal d'émission modulé en bande de base comprend un signal de composante en phase (I) et un signal de composante en quadrature de phase (Q).

13. Procédé selon la revendication 10, dans lequel l'émetteur (16) comprend un compensateur de dégradation d'émission configuré pour compenser le signal d'émission modulé en bande de base en se basant sur le signal de compensation de dégradation d'émission.

14. Procédé selon la revendication 10, comprenant en outre le fait de retarder le signal d'émission modulé en bande de base de sorte que, lorsqu'ils sont comparés, le signal d'émission modulé en bande de base et le signal de réception modulé en bande de base se correspondent dans le temps.

*FIG. 1*

EP 2 568 616 B1

FIG. 2

*FIG. 3*

EP 2 568 616 B1

118

BASEBAND SIGNAL
(REFERENCE SIGNAL)

DC

*FIG. 4*

124    119

TX LOFT

TX IMAGE
SIGNAL    TX SIGNAL

120

122    $f_{c,TX}$    $f \longrightarrow$

*FIG. 5*

129

RX LOFT CREATED
DC OFFSET    135

TX LOFT

IMAGE DUE TO
RX IMBALANCE    132    TX IMAGE
SIGNAL    TX SIGNAL

130    136

134    $f_{c,TX}-f_{c,RX}$    $f \longrightarrow$

*FIG. 6*

FIG. 7

FIG. 8

FIG. 9

FIG. 10

200

START — 202

GENERATING A TRANSMIT BASEBAND MODULATED SIGNAL — 204

OPERATING THE TRANSMITTER TO UPCONVERT THE TRANSMIT BASEBAND MODULATED SIGNAL AND GENERATE AN RF MODULATED SIGNAL HAVING A TRANSMIT IMPAIRMENT — 206

OPERATING THE AUXILAIARY RECEIVER TO DOWNCONVERT THE RF MODULATED SIGNAL AND GENERATE A RECEIVE BASEBAND MODULATED SIGNAL HAVING A RECEIVE IMPAIRMENT THEREIN SPECTRALLY SEPARATED FROM THE TRANSMIT IMPAIRMENT — 208

OPERATING THE CONTROLLER TO ESTIMATE THE TRANSMIT IMPAIRMENT WHILE IGNORING THE RECEIVE IMPAIRMENT BY COMPARING THE TRANSMIT BASEBAND MODULATED SIGNAL WITH THE RECEIVE BASEBAND MODULATED SIGNAL — 210

OPERATING THE CONTROLLER TO GENERATE AN IMPAIRMENT COMPENSATION SIGNAL FOR THE TRANSMITTER BASED UPON THE ESTIMATED TRANSMIT IMPAIRMENT — 212

COMPENSATING THE TRANSMIT BASEBAND MODULATED SIGNAL BASED ON THE COMPENSATION SIGNAL — 214

END — 216

*FIG. 11*

**FIG. 12**

**FIG. 13**

300

START — 302

SELECTIVELY OPERATING THE TRANSMITTER BASED ON A CONTROL SIGNAL BETWEEN A SINGLE-MIXER MODE AND A DUAL-MIXER MODE TO UPCONVERT A TRANSMIT BASEBAND MODULATED SIGNAL AND GENERATE AN RF MODULATED SIGNAL HAVING A TRANSMIT IMPAIRMENT — 304

SELECTIVELY OPERATING AN AUXILIARY RECIVER BASED ON THE CONTROL SIGNAL BETWEEN THE SINGLE-MIXER MODE, WHEN THE TRANSMITTER IS IN THE DUAL-MIXER MODE, AND THE DUAL-MIXER MODE, WHEN THE TRANSMITTER IS IN THE SINGLE-MIXER MODE, TO DOWNCONVERT THE RF MODULATED SIGNAL AND GENERATE A RECIEVE BASEDBAND MODULATED SIGNAL HAVING THE TRANSMIT IMPAIRMENT — 306

OPERATING THE CONTROLLER TO COMPARE THE TRANSMIT BASEBAND MODULATED SIGNAL TO THE TRANSMIT IMPAIRMENT TO DETERMINE AN ERROR DIFFERENCE THEREBETWEEN — 308

OPERATIN THE CONTROLLER TO GENERATE THE CONTROL SIGNAL BASED ON THE ERROR DIFFERENCE — 310

END — 312

FIG. 14

FIG. 15

FIG. 16

1200
AUXILIARY I/O 1060
1080 SERIAL PORT
1400 KEYPAD
1100 SPEAKER
1120 MICROPHONE
1020 SHORT-RANGE COMMUNICATIONS (E.G., IR, NFC, BLUETOOTH, ETC.)
MICROPROCESSOR
OTHER DEVICE SUBSYSTEMS 1201
DISPLAY 1600
FLASH MEMORY 1160
RAM 1180
1800
VOICE COMMUNICATION MODULE 1300A
DATA COMMUNICATION MODULE 1300B
OTHER SOFTWARE MODULES 1300N
1001
DSP 1580
SIGNALS
CONTROL
SIGNALS
CONTROL
RECEIVER 1500
LOs 1601 1520
TRANSMITTER
1540
1560
1000

**EP 2 568 616 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7782928 B
- US 20090262861 A

- US 7856048 B

### Non-patent literature cited in the description

- **DEBAILLE.** Calibration of Direct-Conversion Transceivers. *IEEE Journal of Selected Topics in Signal Processing,* June 2009, vol. 3 (3